# EUROPEAN PATENT APPLICATION

(11) **EP 1 923 575 A2**
(43) Date of publication of application: **21.05.2008**
(21) Application number: 07120822.7
(22) Date of filing: 15.11.2007
(51) Int. Cl.: F04F 5/46, F02C 6/08

(54) **Servo-controlled variable geometry ejector pump**

(30) Priority: 16.11.2006 US 859342 P; 12.04.2007 US 734677
(71) Applicant: Honeywell International Inc., Morristown, New Jersey 07962 (US)
(72) Inventor: Vasquez, John A., Chandler, AZ 85224 (US); Banta, Paul W., Phoenix, AZ 85048 (US)
(74) Representative: Buckley, Guy Julian

(57) **Abstract**

A variable geometry ejector pump is configured to receive pressurized fluid from one or more pressurized fluid sources and to control fluid pressure and temperature down stream of the pump to a variety of pressure and temperature values. The variable geometry ejector pump includes a primary inlet, a secondary inlet, a variable geometry ejector, an ejector valve, an actuator, a mixing section, a diffuser section, and an actuator control mechanism. The actuator control mechanism is adapted to receive one or more control signals, and is operable, in response to the control signals, to control the actuator, to thereby control fluid pressure and temperature down stream of the pump.

## Description

### CROSS-REFERENCES TO RELATED APPLICATIONS

This application claims the benefit of U.S. Provisional Application No. 60/859,342, filed November 16, 2006.

### TECHNICAL FIELD

The present invention relates to ejector pumps and, more particularly, to a variable geometry ejector pump that is configured to control downstream pressure and temperature to a variety of pressure and temperature values.

### BACKGROUND

A gas turbine engine may be used to supply power to various types of vehicles and systems. For example, gas turbine engines may be used to supply propulsion power to an aircraft. Many gas turbine engines include at least three major sections, a compressor section, a combustor section, and a turbine section. The compressor section, which may include two or more compressor stages, receives a flow of intake air and raises the pressure of this air to a relatively high level. The compressed air from the compressor section then enters the combustor section, where a ring of fuel nozzles injects a steady stream of fuel. The injected fuel is ignited by a burner, which significantly increases the energy of the compressed air.

The high-energy compressed air from the combustor section then flows into and through the turbine section, causing rotationally mounted turbine blades to rotate and generate energy. The air exiting the turbine section is then exhausted from the engine. Similar to the compressor section, in a multi-spool engine the turbine section may include a plurality of turbine stages. The energy generated in each of the turbines may be used to power other portions of the engine.

In addition to providing propulsion power, a gas turbine engine may also, or instead, be used to supply either, or both, electrical and pneumatic power to the aircraft. For example, some gas turbine engines include a bleed air port on the compressor section. The bleed air port allows some of the compressed air from the compressor section to be diverted away from the combustor and turbine sections, and used for other functions such as, for example, the aircraft environmental control system, and/or cabin pressure control system.

Regardless of its particular end use, the bleed air is preferably supplied at a sufficiently high pressure to provide proper flow through the system. As noted above, bleed air is extracted after it has been compressed, which increases the load on the turbine engine. Therefore, extra fuel consumption may result, and engine performance can be degraded. The engine performance penalty may be minimized by extracting the bleed air from the lowest compressor stage (or stages) that can supply the pressure required by the downstream systems. The ideal solution for performance would be to have the capability of extracting the bleed air from the compressor stage that exactly matches the downstream systems requirements throughout the operating envelope. Most modem commercial aircraft turbine engines have on the order of 10-12 compressor stages. For practical considerations, typical commercial aircraft bleed systems are limited to two discrete bleed air ports. Moreover, many conventional bleed air systems include a heat exchanger and a fan air valve (FAV) to limit the temperature of the bleed air supplied to some end-use systems. These components can increase overall system weight and, concomitantly, overall system cost. Moreover, the heat exchanger may be mounted outside of the aircraft and in a position that increases aerodynamic drag, which can increase fuel consumption.

One solution to the above-mentioned drawbacks is disclosed in U.S. Patent No. 6,701,715 (hereinafter "the '715 patent"), entitled "Variable Geometry Ejector for a Bleed Air System Using Integral Ejector Exit Pressure Feedback," which is assigned to the Assignee of the instant invention. Once weakness of the solution disclosed in the '715 patent is that the ejector can only control bleed air pressure downstream of the ejector to a single pressure.

Hence, there is a need for a device that may be used in a bleed air system that can be used to more efficiently control the bleed air extracted from the engine by mixing air from separate bleed air ports, decreases overall system weight and cost and/or does not present aerodynamic drag and/or can control downstream bleed air pressure to a variety of pressures and temperatures using a variety of parameters/signals to determine the optimum outlet conditions.

### BRIEF SUMMARY

In one embodiment, and by way of example only, a variable geometry ejector pump includes a primary inlet, a secondary inlet, a variable geometry ejector, an ejector valve, a mixing section, a diffuser, an actuator, and an actuator control unit. The variable geometry ejector includes at least a flow passage and an outlet nozzle. The variable geometry ejector flow passage fluidly communicates the primary fluid inlet port with the variable geometry ejector outlet nozzle. The ejector valve is disposed at least partially within the variable geometry ejector flow passage and is movable therein to control fluid flow from the primary fluid inlet through the variable geometry ejector outlet nozzle. The mixing section is in fluid communication with the secondary inlet and the variable geometry ejector outlet nozzle. The diffuser is disposed downstream of, and is in fluid communication with, the mixing section. The actuator is coupled to the ejector valve and is further coupled to receive position commands. The actuator is responsive to the position commands to controllably move the ejector valve. The actuator control mechanism is coupled to the actuator and is adapted to receive one or more control signals. The actuator control unit is operable, in response to the one or more control signals, to supply the position commands to the actuator.

### BRIEF DESCRIPTION OF THE DRAWINGS

The present invention will hereinafter be described in conjunction with the following drawing figures, wherein like numerals denote like elements, and wherein:

FIG. 1 is a simplified representation of a bleed air system 1000 according to an exemplary embodiment of the present invention; and

FIGS. 2 and 3 are simplified representations of exemplary embodiments of variable geometry ejector pumps that may be used to implement the system of FIG. 1.

### DETAILED DESCRIPTION OF A PREFERRED EMBODIMENT

The following detailed description is merely exemplary in nature and is not intended to limit the invention or the application and uses of the invention. Furthermore, there is no intention to be bound by any theory presented in the preceding background or the following detailed description. In this regard, although the present embodiment is, for ease of explanation, depicted and described as being implemented in an aircraft gas turbine engine bleed air system, it will be appreciated that it can be implemented in various other systems and environments.

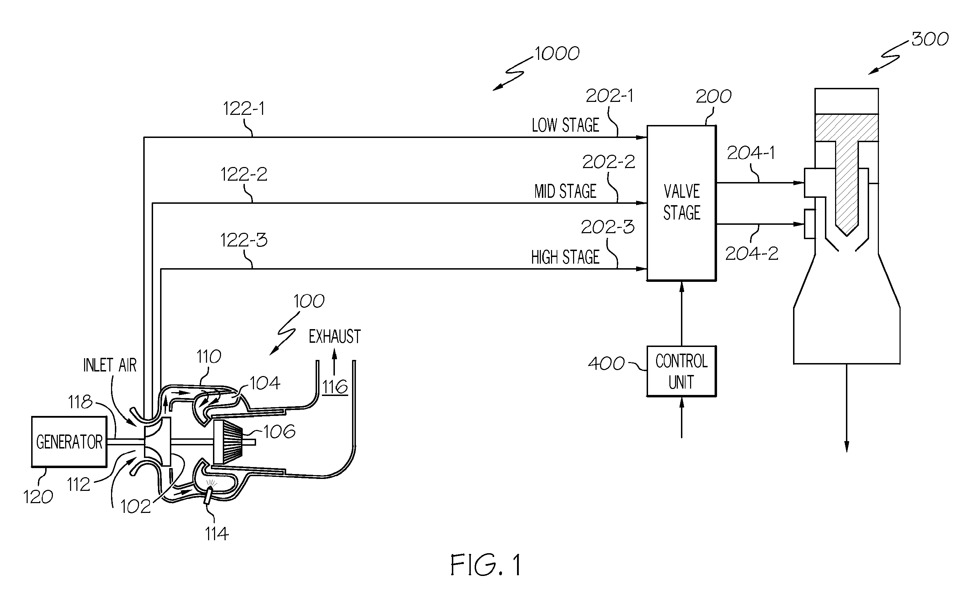

Turning now to FIG. 1, a simplified representation of a bleed air system 1000 that may be used to supply bleed air to, for example, an environmental control system, is depicted. The system 1000 includes a gas turbine engine 100, a valve stage 200, and a variable geometry ejector pump 300. The gas turbine engine 100 includes a compressor 102, a combustor 104, and a turbine 106, all disposed within a case 110. The compressor 102, which is preferably a multi-stage compressor, raises the pressure of air directed into it via an air inlet 112. The compressed air is then directed into the combustor 104, where it is mixed with fuel supplied from a fuel source (not shown). The fuel/air mixture is ignited using one or more igniters 114, and high energy combusted air is then directed into the turbine 106. The combusted air expands through the turbine 106, causing it to rotate. The air is then exhausted via an exhaust gas outlet 116. As the turbine 106 rotates, it drives, via a shaft 118 coupled to the turbine 106, equipment in, or coupled to, the engine 100. For example, in the depicted embodiment the turbine 106 drives the multi-stage compressor 102 and a generator 120 coupled to the engine 100. It will be appreciated that the gas turbine engine 100 is not limited to the configuration depicted in FIG. 1 and described herein, but could be any one of numerous types of gas turbine engines, such as a turbofan gas turbine engine that includes multiple turbines, multiple spools, multiple compressors, and a fan. Moreover, a gas turbine engine need not be the source of the bleed air that is supplied to the remainder of the system 1000.

Preferably, a plurality of bleed air ducts 122 are coupled between the multi-stage compressor 102 and the valve stage 200. The bleed air ducts 122, which in the depicted embodiment include a low-pressure stage duct 122-1, a mid-pressure stage duct 122-2, and a high-pressure stage duct 122-3, are each in fluid communication with different stages in the multi-stage compressor 102. Preferably, as each duct nomenclature denotes herein, the low-pressure stage duct 122-1 is in fluid communication with a relatively low-pressure compressor stage, the mid-pressure stage duct 122-2 is in fluid communication with a relatively mid-pressure compressor stage, and the high-pressure stage duct 122-3 is in fluid communication with a relatively high-pressure compressor stage. Preferably, the low-pressure stage is chosen such that its outlet temperature will not exceed a maximum value as defined by the downstream system, the mid-pressure stage is chosen to optimize the efficiency of the bleed air extraction over the operating envelope, and the high-pressure stage is chosen such that its minimum outlet pressure is sufficiently high to supply the downstream systems when the engine is operated at low power and/or high altitude. In one particular embodiment, the low-pressure stage, mid-pressure stage, and high-pressure stage are a third stage, a fourth stage, and a tenth stage, respectively. It will additionally be appreciated that the system 1000 could be implemented with more than three bleed air ducts 122 coupled to more than three different compressor stages, if needed or desired.

Bleed air from each of the compressor stages is supplied to the valve stage 200. The valve stage 200 is coupled between each of the bleed air ducts 122 and the variable geometry ejector pump 300 and, at least in the depicted embodiment, includes three inlet ports 202 and two outlet ports 204. In particular, the valve stage 200 includes a low-pressure bleed air inlet port 202-1, a mid-pressure bleed air inlet port 202-2, a high-pressure bleed air inlet port 202-3, a high-pressure bleed air outlet port 204-1, and a low-pressure bleed air outlet port 204-2. The valve stage 200 may be implemented as a multiport valve, a plurality of independently controlled valves, or various combinations thereof. It will additionally be appreciated that in some embodiments, the system 1000 may be implemented without the valves stage 200.

No matter its specific physical implementation, the valve stage 200, if it is included in the system 1000, is configured to selectively allow bleed air from one or more of the three bleed air conduits 122 to flow out one or more of the bleed air outlet ports 204. In the depicted embodiment, the valve stage 200 is controlled by a control unit 400, which is configured to supply appropriate commands to the valve stage 200. The valve stage 200, in response to the commands from the control unit 400, selectively allows bleed air from one or more of the three bleed air conduits 122 to flow out one or more of the bleed air outlet ports 204 to the variable geometry ejector pump 300. It will be appreciated that the control unit 400 could be implemented as a stand-alone device that is used to control the operation of the valve stage 200 only, or one or more other devices. It will additionally be appreciated that the function of the control unit 400 could be implemented in another control device such as, for example, an engine controller.

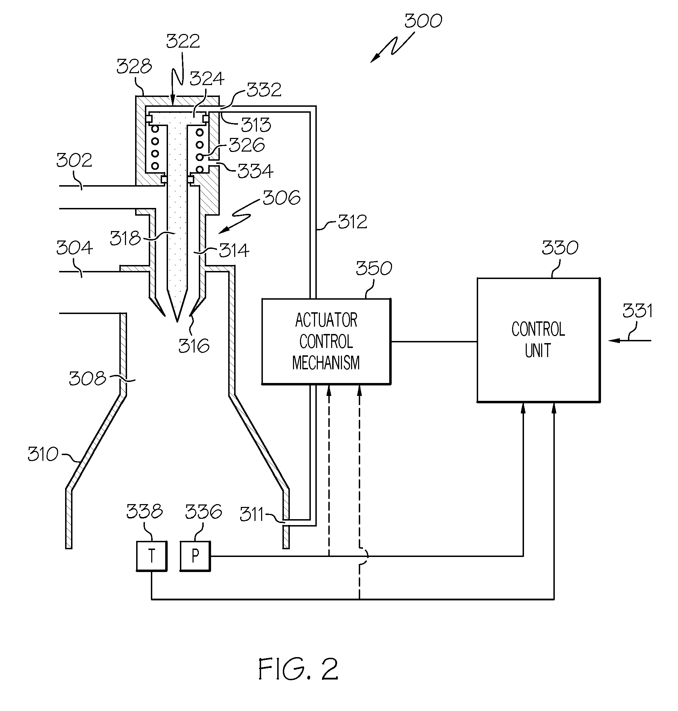

Turning to FIG. 2, a one exemplary embodiment of the variable geometry ejector pump 300 is depicted, and will now be described in more detail. The depicted variable geometry ejector pump 300 includes a primary inlet 302, a secondary inlet 304, a variable geometry ejector 306, a mixing section 308, a diffuser 310, a feedback conduit 312, and a actuator control mechanism 350. The primary inlet 302 and the secondary inlet 304 may simultaneously receive a flow of fluid, such as engine bleed air, or only one of the inlets 302, 304 may receive may receive a flow of fluid. Preferably, however, if both inlets 302, 304 are simultaneously receiving fluid flow, the fluid having the higher relative pressure (and thus higher relative temperature) is supplied to the primary inlet 302 and the fluid having the lower relative pressure (and thus lower relative temperature) is supplied to the secondary inlet 304.

The variable geometry ejector 306 includes a flow passage 314, an outlet nozzle 316, a valve element 318, and an actuator 322. The flow passage 314 fluidly communicates the primary inlet 302 with the outlet nozzle 316. The valve element 318 is movably disposed at least partially within the flow passage 314 and its position controls fluid flow through the flow passage 314 and out the outlet nozzle 316, to thereby control the flow of fluid supplied to the primary inlet 302 into the mixing section 308.

The position of the valve element 318 is controlled by the actuator 322, which may include a piston 324, and a bias spring 326. The piston 324 is coupled to the valve element 318 and is disposed in an actuator enclosure 328. The bias spring 326 is disposed between the piston 324 and the actuator enclosure 328 and supplies a bias force to the piston 324 that biases the valve element 318 away from the outlet nozzle 316. The actuator enclosure 328 includes a control port 332 and a vent 334. There may additionally be a first seal 319 between the piston 324 and actuator enclosure 328, and a second seal 321 between the valve element 318 and the actuator enclosure 328. It will be appreciated that actuator 322 may alternatively be implemented as an electrical or electromechanical type of actuator.

Bleed air, or other fluid, supplied to the secondary inlet 304 is supplied to the mixing section 308, where it mixes with fluid that may be exiting the ejector pump outlet nozzle 316. It will be appreciated that, depending on the position of the valve element 318, there may be no fluid exiting the ejector pump outlet nozzle 316. Nonetheless, fluid in the mixing section 308 then flows into and through the diffuser 310, and is supplied to one or more bleed air loads. As FIG. 2 also depicts, a portion of the fluid flowing through the diffuser 310 is also directed into the feedback conduit 312.

The feedback conduit 312 includes an inlet 311 and an outlet 313. The feedback conduit inlet 311 is in fluid communication with the diffuser 310, and the feedback conduit outlet 313 is in fluid communication with the actuator enclosure control port 332. Thus, the static pressure of the bleed air in the diffuser 310 may be selectively directed to the actuator piston 324. As such, the differential pressure across the piston 324 may be used to control the position of the ejector pump valve element 318 and, concomitantly, the geometry of the ejector pump outlet nozzle 316 and ejector pump exit flow. The differential pressure across the actuator piston 324 is controlled by the actuator control mechanism 350.

The actuator control mechanism 350 is disposed, at least partially, in the feedback conduit 312 between the feedback conduit inlet 311 and outlet 313. The actuator control mechanism 350, as noted above, is configured to control the position of the ejector pump valve element 318 based on a control scheme using multiple input signals and accounting for changing requirements. It will be appreciated that the actuator control mechanism 350 may be implemented using any one of numerous feedback control devices now known or developed in the future. Preferably, however, it is implemented using a servomechanism, such as a servo-controlled valve.

No matter how the actuator control mechanism 350 is specifically implemented, it is preferably configured to be responsive to commands received from either a control unit or one or more signals representative of pressure and or temperature downstream of or within the variable geometry ejector pump 300. In the depicted embodiment, the actuator control mechanism 350 is responsive to commands received from a control unit 330. The control unit 330 may be implemented as either a pneumatic or electronic device, and is responsive to system inputs or commands 331 received from either a separate, non-illustrated control unit or system, and/or one or more signals representative of fluid pressure and temperature downstream of (or within) the ejector pump 300. The pressure and temperature signals, at least in the depicted embodiment, are supplied from a pressure sensor 336 and a temperature sensor 338. It will be appreciated that the valve 300 could include only one of the sensors. It will additionally be appreciated that if the system inputs or commands 331 are supplied from a control unit, this control unit may be the same control unit 400 that is used to control the valve stage 200, or it may be implemented as a separate, independent control unit.

Alternatively, and as was noted above, the pressure and/or temperature signals could be supplied directly to the actuator control mechanism 350. This particular configuration is depicted in FIG. 2 using dotted lines. It will additionally be appreciated that the sensors 336, 338, rather than supplying electrical signals to the control unit 330 or the actuator control mechanism 350, could instead be configured as pneumatic-type sensors. In such an embodiment, the actuator control mechanism 350 could be implemented as a pneumatically controlled device that is responsive to pneumatic signal variations supplied from the sensors 336, 338.

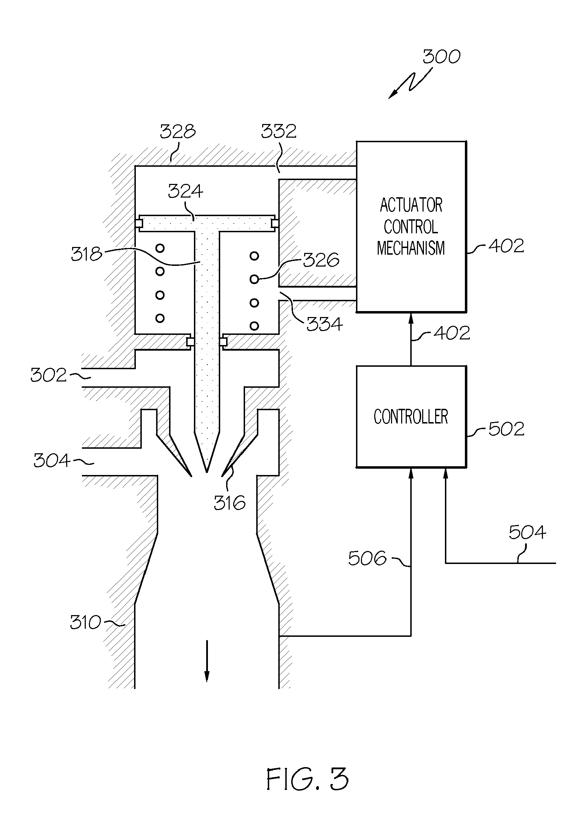

In yet another alternative embodiment, which is depicted in FIG. 3, the ejector pump 300 is configured similar to that depicted in FIG. 2, but the vent 334 is not in fluid communication with the ambient environment and the actuator control mechanism 350 is not in fluid communication with the diffuser 310. Rather, in this embodiment, the actuator control mechanism 350 is in fluid communication with both of the actuator enclosure ports 332, 334.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention.

## Claims

1. A variable geometry ejector pump (300), comprising:
a primary inlet (302);
a secondary inlet (304);
a variable geometry ejector (306) including at least a flow passage (314) and an outlet nozzle (316), the variable geometry ejector flow passage (314) fluidly communicating the primary fluid inlet port with the variable geometry ejector outlet nozzle (316);
an ejector valve (318) disposed at least partially within the variable geometry ejector flow passage (314) and movable therein to control fluid flow from the primary fluid inlet through the variable geometry ejector outlet nozzle (316);
a mixing section (308) in fluid communication with the secondary inlet and the variable geometry ejector outlet nozzle (316);
a diffuser (310) disposed downstream of, and in fluid communication with, the mixing section (308);
an actuator (322) coupled to the ejector valve (348) and further coupled to receive position commands, the actuator (322) responsive to the position commands to controllably move the ejector valve; and
an actuator control mechanism (350) coupled to the actuator (322) and adapted to receive one or more control signals, the actuator control mechanism operable, in response to the one or more control signals, to supply the position commands to the actuator (322).

2. The variable geometry ejector pump (300) of Claim 1, wherein the position commands supplied from the actuator control mechanism (350) are pneumatic commands.

3. The variable geometry ejector pump (300) of Claim 2, wherein:
the actuator (322) is responsive to a differential pneumatic pressure to thereby controllably move the ejector valve; and
the actuator control mechanism (350) controls the differential pressure.

4. The variable geometry ejector pump (300) of Claim 3, further comprising:
a feedback conduit (312) including an inlet port and an outlet port, the feedback conduit (312) inlet port in fluid communication with the diffuser (310), the feedback conduit (312) outlet port in fluid communication with the actuator (322),
wherein the actuator control mechanism (350) is disposed at least partially within the feedback conduit (312) and is operable, in response to the one or more control signals, to control the differential pressure via the feedback conduit (312).

5. The variable geometry ejector pump (300) of Claim 4, wherein the actuator (322) comprises:
an actuator enclosure (328) including a control port (332) and a vent port (334), the actuator enclosure control port in fluid communication with the feedback conduit outlet port, the actuator enclosure vent port (334) in fluid communication with an ambient environment;
a piston (324) coupled to the valve (318) and slidably disposed within the actuator enclosure (328) between the control port (332) and the vent port (334); and
a spring (326) disposed within the actuator enclosure (328) and configured to supply a bias force to the piston (324) that biases the valve away from the variable geometry ejector outlet nozzle (316).

6. The variable geometry ejector pump (300) of Claim 4, further comprising:
one or more sensors (336, 338) disposed at least partially within, or downstream of, the diffuser section and operable to supply one or more sensor signals; and
a control unit (330) coupled to receive the one or more sensor signals and operable, in response thereto, to selectively supply the one or more control signals to the feedback control mechanism.

7. The variable geometry ejector pump (300) of Claim 1, further comprising:
a control unit (330) operable to selectively supply the one or more control signals to the actuator control mechanism (350).

8. The variable geometry ejector pump (300) of Claim 7, further comprising:
one or more sensors (336, 338) disposed at least partially within, or downstream of, the diffuser section and operable to supply one or more sensor signals to the control unit (330).

9. The variable geometry ejector pump (300) of Claim 8, wherein the control unit (330) is responsive to the one or more sensor signals to selectively supply the one or more control signals.

10. The variable geometry ejector pump (300) of Claim 1, further comprising:
one or more sensors (336, 338) disposed at least partially within, or downstream of, the diffuser section and operable to supply the one or more control signals to the feedback control mechanism.
